# EUROPEAN PATENT SPECIFICATION

(11) **EP 0 482 642 B1**
(45) Date of publication and mention of the grant of the patent: **08.01.1997**
(21) Application number: 91118167.5
(22) Date of filing: 24.10.1991
(51) Int. Cl.: G11B 5/39

(54) **Composite magnetoresistive thin-film magnetic head**
Zusammengesetzter magnetoresistiver Dünnfilmmagnetkopf
Tête magnétique composite magnétorésistive à film mince

(30) Priority: 24.10.1990 JP 286877/90
(43) Date of publication of application: 29.04.1992
(73) Proprietor: SONY CORPORATION, Tokyo (JP)
(72) Inventor: Saito, Norio, c/o Sony Magnetic Products, Inc., Shinagawa-ku, Tokyo (JP)
(74) Representative: TER MEER - MÜLLER - STEINMEISTER & PARTNER

(56) References cited:
- EP-A- 0 111 755
- US-A- 4 356 523
- PATENT ABSTRACTS OF JAPAN vol. 11, no. 253 (P-606)(2700) 18 August 1987 & JP-A-62 058 410 (SONY CORP) 14 March 1987
- PATENT ABSTRACTS OF JAPAN vol. 11, no. 253 (P-606)18 August 1987 & JP-A-62 058 411 (SONY CORP) 14 March 1987
- PATENT ABSTRACTS OF JAPAN vol. 5, no. 115 (P-72)(787) 24 July 1981 & JP-A-56 054 621 (NIPPON DENKI K. K.) 14 May 1981

## Description

### BACKGROUND OF THE INVENTION

### Field of the Invention

The present invention relates to a composite type thin film magnetic head formed by integrating a reproducing magnetic head of a magneto-resistance effect type and a recording magnetic head of an inductive type, which composite type thin film magnetic head is suitably used as a recording and reproducing magnetic head for a hard disk drive, for example.

### Description of Related Art

As various magnetic heads, e.g., a recording and reproducing magnetic head for a hard disk drive, a composite type thin-film magnetic head tends to be used. The composite type thin-film magnetic head is formed by integrating a magneto-resistance effect type magnetic head (which will be hereinafter referred to as an MR magnetic head) having a superior sensitivity to a short wavelength which magnetic head is used in reproduction and an inductive type magnetic head which is used in recording.

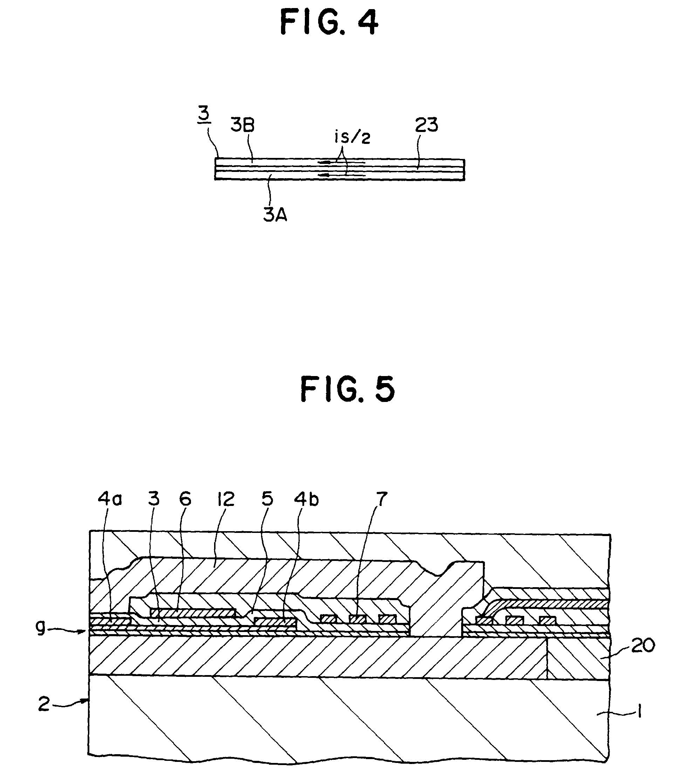

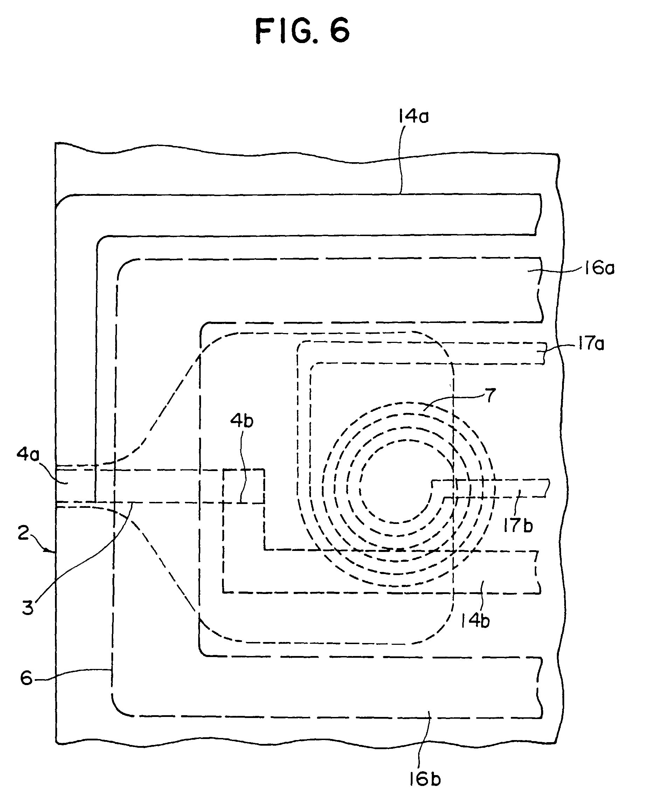

Figs. 5 and 6 are schematic sectional and plan views of such a composite type thin-film magnetic head, respectively. Referring to Figs. 5 and 6, reference numeral 1 denotes a substrate constructed of a slider (not shown) adapted to fly from a magnetic recording medium (not shown), e.g., a hard disk for use with a hard disk drive, due to an air flow caused by rotation of the magnetic recording medium, or constructed of a base plate mounted on the slider. A first thin-film magnetic core 11 and a second thin-film magnetic core 12 are laminated on the substrate 1 in such a manner that a magnetic gap g is formed between front end portions of the first and second thin-film magnetic cores 11 and 12 so as to be exposed to a contacting or facing surface in relation to the magnetic recording medium, e.g., an ABS (Air Bearing Surface) 2 of the slider in the hard disk drive. A magneto-resistance effect type magnetic sensing element (which will be hereinafter referred to as an MR magnetic sensing element) 3 is so formed as to be exposed to the ABS 2 and extend rearwardly from the magnetic gap g. Two electrodes 4a and 4b are formed on the MR magnetic sensing element 3 at front and rear ends thereof, respectively, and a sensing current iₛ is applied between both the electrodes 4a and 4b to flow in the MR magnetic sensing element 3.

A bias conductor 6 is formed over the MR magnetic sensing element 3 with an insulating layer 5 interposed therebetween in such a manner that the bias conductor 6 extends orthogonally to a longitudinal direction of the MR magnetic sensing element 3. When current is supplied to the bias conductor 6, an external bias magnetic field having a desired direction is given to the MR magnetic sensing element 3, thereby desirably magnetizing the same, which is in turn operated in a magneto-resistance characteristic region where a superior linearity of magnetoresistance and a high sensitivity are indicated.

A head coil 7 formed from a thin-film conductive layer is wound around a magnetically connecting portion between the first and second thin-film magnetic cores 11 and 12 at rear portions thereof.

With this arrangement, there is provided a composite type thin-film magnetic head constituted of an MR magnetic head having a so-called shielding construction wherein the MR magnetic sensing element 3 is arranged between the first and second thin-film magnetic cores 11 and 12 and an inductive type magnetic head wherein the head coil 7 is wound around a magnetic path formed by the first and second thin-film magnetic cores 11 and 12.

According to such a composite type thin-film magnetic head, the magnetic cores constituting the inductive type recording magnetic head and forming the magnetic gap g is used as a shielding magnetic member for the MR magnetic head for reproduction. It is therefore advantageous that a high sensitivity and a compact construction can be obtained. However, such a construction has the following disadvantage. That is, as shown in Fig. 6, terminal leading portions 14a and 14b extend from the electrodes 4a and 4b of the MR magnetic sensing element 3, respectively. Further, terminal leading portions 16a and 16b extend from opposite ends of the bias conductor 6. Moreover, terminal leading portions 17a and 17b extend from opposite ends of the head coil 7. In this manner, many terminal leading portions are necessary, and a total area occupied by these terminal leading portions cannot be sufficiently reduced.

EP-A-0111755 discloses a dual element magnetic transducer comprising a thin film magnetoresistive sensor which is transversely biased by flux in the air gap of an inductive write core because different portions of the magnetoresistive sensor have a different spatial relationship to parallel opposing portions of the inductive core. As a consequence, the magnetic transducer excludes a bias conductor for applying a transverse bias magnetic field to the magnetoresistive sensor. The magnetoresistive sensor consists of one magnetoresistive layer and one exchange bias layer for longitudinally biasing the sensor.

US-A-4,356,523 discloses a magnetoresistive transducer comprising two parallel magnetoresistive elements being separated from each other by a nonmagnetic electrically insulating material. Sense currents flow simultaneously through both elements in the same direction.

### SUMMARY OF THE INVENTION

The composite type thin-film magnetic head according to the invention comprises the features of appended claim 1.

In the present invention, the MR thin-film magnetic head excludes a bias conductor for applying an external bias magnetic field to an MR magnetic sensing element.

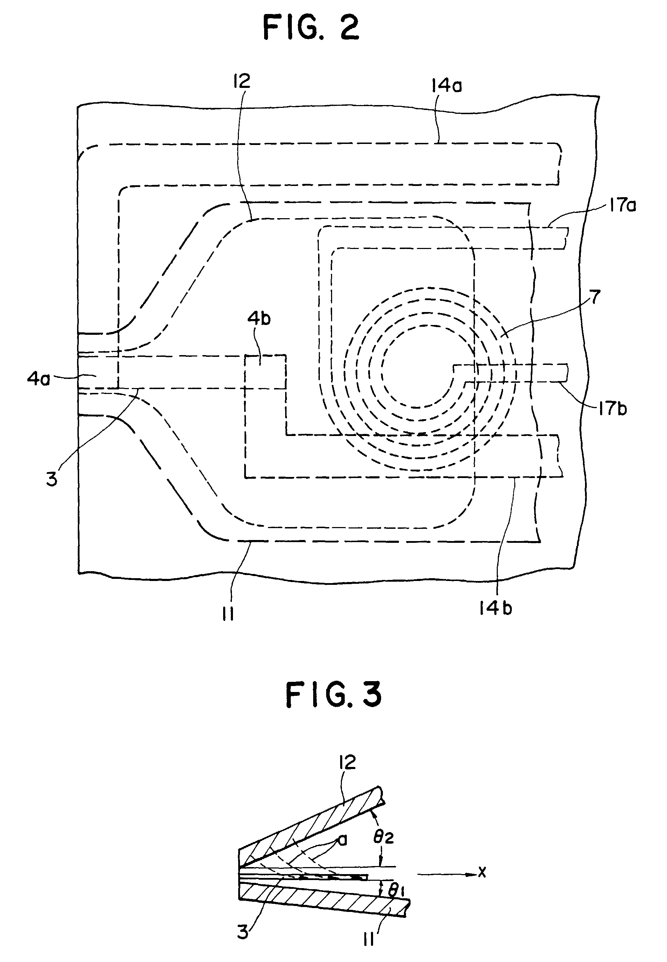

There is shown in Figs. 2 and 3 a construction of the composite type thin-film magnetic head according to the present invention, in which Fig. 2 is a schematic plan view; and Fig. 3 is a schematic illustration of an essential part. As shown in Figs. 2 to 3, a first and second thin-film magnetic cores 11 and 12 are laminated so as to form a magnetic gap g between front end portions thereof so that the magnetic gap g is exposed to a contacting or facing surface in relation to a magnetic recording medium, e.g., an ABS 2 in a flying type magnetic head. The composite type thin-film magnetic head is constituted of an inductive type recording magnetic head wherein a closed magnetic path is formed by the first and second thin-film magnetic cores 11 and 12 with the magnetic gap g formed on the front side thereof, and a head coil 7 is wound around the closed magnetic path, and of an MR reproducing magnetic head wherein the first and second thin-film magnetic cores 11 and 12 serve as a magnetic shield, and an MR magnetic sensing element 3 extends rearwardly from the magnetic gap g so as to receive a signal magnetic field based on recorded magnetization given from the magnetic recording medium to the magnetic gap g.

Particularly, as shown in Fig. 3, it is assumed that an angle defined between the first thin-film magnetic core 11 and a surface of the MR magnetic sensing element 3 extending in a longitudinal direction x thereof is represented by θ₁, and that an angle defined between the second thin-film magnetic core 12 and the surface of the MR magnetic sensing element 3 is represented by θ₂. On this assumption, the relation between both the angles θ₁ and θ₂ is set to θ₁ ≠ θ₂. Furthermore, the angle θ₁ is set to be larger than an angle of the surface of the MR magnetic sensing element 3 with respect to the longitudinal direction x thereof, that is, the angle θ₁ is set to θ₁ > 0°. On the other hand, the angle θ₂ is set to 0° < θ₂ ≤ 90°. With this setting of the angles θ₁ and θ₂, the spacing between the first and second thin-film magnetic cores 11 and 12 is gradually increased in a disposed area of a longitudinally middle portion of the MR magnetic sensing element 3 as a distance from the magnetic gap g in the rearward direction increases.

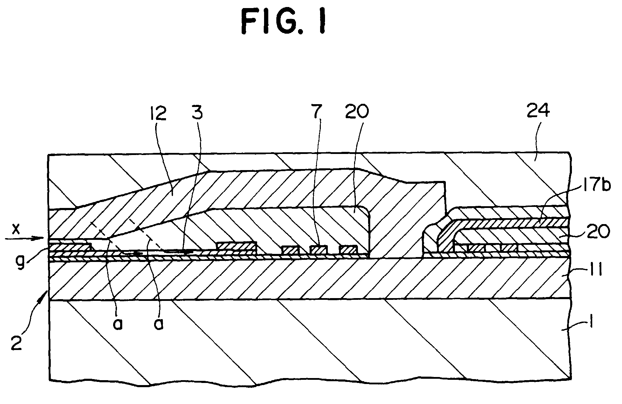

In the above-mentioned construction of the present invention, the formation of the bias conductor for the MR magnetic sensing element 3 as mentioned with reference to Fig. 5 is omitted. In reproduction, a desired current is supplied to the head coil 7 to thereby generate a magnetic flux shown by dashed arrows a in Figs. 1 and 3 in the magnetic gap g between the first and second thin-film magnetic cores 11 and 12. In this case, since the spacing between the first and second thin film magnetic cores 11 and 12 in the forming area of the MR magnetic sensing element 3 is increased as the distance from the magnetic gap g in the rearward direction increases, under the condition of θ₁ ≠ θ₂, a component of the magnetic flux (magnetic field) in the magnetic gap g is generated in the direction x, that is, in the rearward direction of the MR magnetic sensing element 3. Thus, a desired external bias magnetic field can be applied to the MR magnetic sensing element 3. In this manner, by suitably selecting a current to be supplied to the head coil 7, a desired bias magnetic field can be applied to the MR magnetic sensing element 3. Accordingly, the MR magnetic sensing element 3 can be operated in the range such that a magneto-resistance characteristic with a superior linearity and sensitivity is indicated.

Further, as the bias conductor 6 employed in the prior art shown in Figs. 5 and 6 can be omitted, an area to be occupied by the bias conductor 6 and an area to be occupied by the terminal leading portions 16a and 16b extending from the opposite ends of the bias conductor 6 can be accordingly omitted. As a result, the structure can be simplified, and a total occupied area can be reduced. Accordingly, the general construction can be reduced in size, and the manufacturing step can be simplified.

As described above, the composite type thin-film magnetic head of the present invention is constituted of an MR magnetic reproducing magnetic head and an inductive type recording magnetic head. The MR type reproducing magnetic head is constructed so that a bias magnetic field to be applied to the MR magnetic sensing element 3 is obtained as a magnetic field generated by using the head coil 7 as an induction coil of the inductive type recording magnetic head. As a result, the bias conductor employed in the prior art for applying a bias magnetic field to the MR magnetic sensing element 3 of the MR type reproducing magnetic head can be omitted. Accordingly, the terminal leading portions extending from the bias conductor can also be omitted. As a result, a total occupied area can be reduced, thereby realizing a simple construction and easy manufacturing and improving the reliability of the composite type thin-film magnetic head.

Other objects and features of the invention will be more fully understood from the following detailed description and appended claims when taken with the accompanying drawings.

### BRIEF DESCRIPTION OF THE DRAWINGS

Fig. 1 is a schematic sectional view of a composite type thin-film magnetic head;
Fig. 2 is a plan view of a thin-film magnetic head according to a preferred embodiment of the present invention;
Fig. 3 is a schematic illustration of an essential part of the magnetic head shown in Fig. 1;
Fig. 4 is a sectional view of an MR magnetic sensing element shown in Fig. 1;
Fig. 5 is a schematic sectional view of a composite type thin-film magnetic head in the prior art; and
Fig. 6 is a plan view of Fig. 5.

### DETAILED DESCRIPTION OF THE PREFERRED EMBODIMENT

A preferred embodiment of the composite type thin-film magnetic head according to the present invention will now be described in detail with reference to Fig. 2. Referring to Fig. 2, a first thin-film magnetic core 11 of FeNi or the like is formed with a desired pattern by flame plating or the like as known in the art on a substrate 1 constructed of a slider itself of Al₂O₃·TiC or the like, which constitutes a flying type magnetic head, or a similar non-magnetic base plate mounted on the slider, under the condition where a desired external magnetic field is applied. The desired pattern is formed by removing a photoresist, for example, and etching an undesired peripheral portion. Then, a non-magnetic insulating layer 20 of SiO₂, Al₂O₃ or the like is so formed as to embed the first thin-film magnetic core 11 by sputtering or the like. After flattening the surface of the insulating layer 20, an MR magnetic sensing element 3 is formed on the surface of the insulating layer 20.

Fig. 4 illustrates a schematic section of the MR magnetic sensing element 3 by way of example. As shown in Fig. 4, the MR magnetic sensing element 3 has a laminated structure such that first and second MR thin films 3A and 3B are magneto-statically connected with each other through a non-magnetic insulating thin film 23 of SiO₂ or the like. With this structure, generation of magnetic domain walls can be avoided to thereby reduce Barkhausen noise. The MR thin films 3A and 3B constituting the MR magnetic sensing element 3 are laminated together, through the non-magnetic insulating layer 23 so as to extend rearwardly along the first thin-film magnetic core 11 from its front end, that is, in a direction x representing a depth direction of a magnetic gap g to be hereinafter, described.

Two electrodes 4a and 4b formed from thin-film conductive layers are electrically connected to opposite ends of the MR thin films 3A and 3B of the MR magnetic sensing element 3, and terminal leading portions 14a and 14b are so formed as to extend from the electrodes 4a and 4b, respectively.

A head coil 7 having a desired pattern of a thin-film conductive layer is formed simultaneously with the formation of the electrodes 4a and 4b and the terminal leading portions 17a and 17b or in a different step.

Then, an insulating layer 20 (cf fig. 1) of SiO₂ or the like is formed by sputtering or the like so as to entirely cover all the electrodes 4a and 4b, the MR magnetic sensing element 3, the head coil 7, etc. In this step, the insulating layer 20 is partially inclined at an angle θ₂ so that a thickness thereof is gradually increased in a forming area of the MR magnetic sensing element 3 as a distance from a front end of the MR magnetic sensing element 3 in the rearward direction increases.

Then, the insulating layer 20 is perforated by selective etching using photolithography to form a window at a central portion of the head coil 7. Then, a second thin-film magnetic core 12 is so formed as to be connected through the window to the first thin-film magnetic core 11, thus effecting magnetic connection between the first and second thin-film magnetic cores 11 and 12. The second thin-film magnetic core 12 is formed with a pattern such that a width thereof is small at its front end, and is gradually increased as a distance from the front end in the rearward direction increases.

In this manner, the magnetic gap g having a desired spacing or a gap length is formed between the front ends of the first and second thin-film magnetic cores 11 and 12. Further, the first and second thin-film magnetic cores 11 and 12 are arranged so that a spacing therebetween in the forming area of the MR magnetic sensing element 3 on the rear side of the magnetic gap g is gradually increased under the conditions that an angle θ₁ defined between the first thin-film magnetic core 11 and a surface of the MR magnetic sensing element 3 extending in the direction x and an angle θ₂ defined between the second thin-film magnetic core 12 and the surface of the MR magnetic sensing element 3 are related to each other so as to satisfy θ₁ ≠ θ₂, θ₁ > 0°, and 0° < θ₂ ≤ 90°, preferably 30° ≤ θ₂ ≤ 90°.

Further, a terminal leading portion 17a with a desired pattern of a thin-film conductive layer extends from an outer end of the head coil 7 having a spiral pattern, for example, and a terminal leading portion 17b with a desired pattern of a thin-film conductive layer extends from an inner end of the head coil 7 through a window formed in the insulating layer 20. Finally, a protective film 24 (cf. fig. 1) of a non-magnetic insulating layer, for example, is formed so as to entirely cover the second thin-film magnetic core 12.

The front end surface of the composite type thin-film magnetic head having the above construction is polished together with the front end surface of the substrate 1 to form an ABS 2 as a flat contacting or facing surface in relation to a magnetic recording medium, so that the front end of the magnetic gap g is exposed to the ABS 2.

In carrying out recording to the magnetic recording medium by using the composite type thin-film magnetic head according to the present invention, a desired current with a signal current superimposed according to a desired recording information is supplied to the head coil 7 to generate a magnetic flux in a closed magnetic path formed by the first thin-film magnetic core 11 and the second thin-film magnetic core 12 and apply the magnetic field from the magnetic gap g to the magnetic recording medium, thus effecting recording of the information. In carrying out reproduction, a predetermined sensing current is applied between both the electrodes 4a and 4b of the MR magnetic sensing element 3 (i.e., between both the terminal leading portions 14a and 14b). More specifically, as shown in Fig. 4, a predetermined sensing current iₛ/2 is supplied to each of the MR thin films 3A and 3B constituting the MR magnetic sensing element 3 in the depth direction of the magnetic gap g. Simultaneously, a desired direct current is supplied to the head coil 7. As a result, an external bias magnetic field along the flowing direction of the sensing current in the MR magnetic sensing element 3 is generated as shown by dashed arrows a in Figs. 1 and 3, thus obtaining a desired bias magnetized condition of the MR magnetic sensing element 3. Under the magnetized condition, a resistance change generated in the MR magnetic sensing element 3 having received a signal magnetic field due to recorded magnetization of the magnetic recording medium from the magnetic gap g is detected as a voltage change between both the electrodes 4a and 4b, thus reading the recorded magnetization.

It is to be noted that the structure of each portion of the composite type thin-film magnetic head as mentioned above may be changed or modified within the scope of the present invention. For instance, although the head coil 7 is formed from a single layer thin film having a spiral pattern in the above preferred embodiment, it may be constructed as a multilayer structure having a plurality of thin-film layers laminated together through insulating layers and connected together at groove portions.

## Claims

1. A composite type thin-film magnetic head constituted of a magneto-resistance effect type thin-film magnetic head and an inductive type thin-film magnetic head, said composite type thin-film magnetic head including
a first thin-film magnetic core (11),
a second thin-film magnetic core (12) laminated on said first thin-film magnetic core (11) so as to form a magnetic gap (g) between front end portions of said first and second thin-film magnetic cores, said magnetic gap (g) being exposed to a contacting or facing surface (2) in relation to a magnetic recording medium,
a magneto-resistance effect type magnetic sensing element (3) disposed in said magnetic gap (g) and extending therefrom in a rearward direction (x), and
a head coil (7) wound around a magnetic path formed by said first and second thin-film magnetic cores on a rear side of said magneto-resistance effect type magnetic sensing element,
wherein the spacing between said front end portions of said first and second thin-film magnetic cores, in an area where said magneto-resistance effect type magnetic sensing element (3) is disposed, is gradually increased as the distance from said magnetic gap (g) in said rearward direction (x) increases,
wherein an angle θ₁ defined between said first thin-film magnetic core (11) and said magneto-resistance effect type magnetic sensing element (3), and an other angle θ₂ defined between said second thin-film magnetic core (12) and said magneto-resistance effect type magnetic sensing element (3), are related to each other so as to satisfy θ₁ ≠ θ₂,
**characterized in that**
said angle θ₁ is set to 0° < θ₁ and said single Θ₂ is set to 0° < Θ₂,
said magneto-resistance effect type magnetic sensing element (3) is a laminate of a first magneto-resistance effect type thin film (3A) and a second magneto-resistance effect type thin film (3B) magneto-statically connected through a non-magnetic insulating thin film (23) to said first magneto-resistance effect type thin film (3A), and
two electrodes (4a, 4b) formed from thin-film conductive layers are electrically connected to opposite ends of said first and second magneto-resistance effect type thin films (3A, 3B).

2. The composite type thin-film magnetic head according to claim 1, wherein said angle Θ₂ is set to 0° < Θ₂ ≤ 90°.

3. The composite type thin-film magnetic head according to claim 2. wherein said angle Θ2 is set to 30° ≤ Θ2 ≤ 90°.

## Patentansprüche

1. Zusammengesetzter Dünnfilmmagnetkopf aus einem Dünnfilmmagnetkopf vom Typ mit Magnetowiderstandseffekt und einem induktiven Dünnfilmmagnetkopf, mit:
- einem ersten Dünnfilmmagnetkern (11);
- einem zweiten Dünnfilmmagnetkern (12), der so auf den ersten Dünnfilmmagnetkern (11) laminiert ist, dass zwischen den Vorderendbereichen des ersten und zweiten Dünnfilmmagnetkerns ein Magnetspalt (g) ausgebildet ist, der an einer kontaktierenden oder zugewandten Fläche (2) in bezug auf einen magnetischen Aufzeichnungsträger freiliegt;
- einem magnetischen Abtastelement (3) vom Typ mit Magnetowiderstandseffekt, das im Magnetspalt (g) angeordnet ist und sich ausgehend von diesem in rückwärtiger Richtung (x) erstreckt; und
- einer Kopfspule (7), die an der Rückseite des magnetischen Magnetowiderstands-Abtastelements um einen durch den ersten und zweiten Dünnfilmmagnetkern gebildeten Magnetpfad gewickelt ist;
- wobei der Abstand zwischen den Vorderendbereichen des ersten und zweiten Dünnfilmmagnetkerns im Bereich, in dem das magnetische Magnetowiderstands-Abtastelement (3) angeordnet ist, allmählich mit zunehmendem Abstand vom Magnetspalt (g) in rückwärtiger Richtung (x) zunimmt;
- wobei ein Winkel Θ₁, der zwischen dem ersten Dünnfilmmagnetkern (11) und dem magnetischen Magnetowiderstands-Abtastelement (3) gebildet ist, und ein anderer Winkel Θ₂, der zwischen dem zweiten Dünnfilmmagnetkern (12) und dem magnetischen Magnetowiderstands-Abtastelement (3) gebildet ist, so miteinander in Beziehung stehen, dass sie die Bedingung Θ₁ ≠ Θ₂ erfüllen;
**dadurch gekennzeichnet, dass**
- der Winkel Θ₁ auf 0° < Θ₁ eingestellt ist und der Winkel Θ₂ auf 0° < Θ₂ eingestellt ist;
- das magnetische Magnetowiderstands-Abtastelement (3) ein Laminat aus einem ersten Magnetowiderstands-Dünnfilm (3A) und einem zweiten Magnetowiderstands-Dünnfilm (3B), der über einen unmagnetischen, isolierenden Dünnfilm (23) magnetostatisch mit dem ersten Magnetowiderstands-Dünnfilm (3A) verbunden ist, ist; und
- zwei Elektroden (4a, 4b), die aus leitenden Dünnfilmschichten bestehen, elektrisch an entgegengesetzten Enden des ersten und zweiten Magnetowiderstands-Dünnfilms (3A, 3B) angeschlossen sind.

2. Zusammengesetzter Dünnfilmmagnetkopf nach Anspruch 1, bei dem der Winkel Θ₂ auf 0° < Θ₂ ≤ 90° eingestellt ist.

3. Zusammengesetzter Dünnfilmmagnetkopf nach Anspruch 2, bei dem der Winkel Θ₂ auf 30° ≤ Θ₂ ≤ 90° eingestellt ist.

## Revendications

1. Tête magnétique à film mince du type composite constituée d'une tête magnétique à film mince du type à effet magnéto-résistif et d'une tête magnétique à film mince du type inductif, ladite tête magnétique à fil mince du type composite comprenant :
- un premier noyau magnétique à film mince (11);
- un second noyau magnétique à film mince (12) déposé en couche sur ledit premier noyau magnétique à film mince (11) de façon à former un intervalle magnétique (g) entre des parties d'extrémité avant desdits premier et second noyaux magnétiques à film mince, ledit intervalle magnétique (g) étant exposé à une surface de contact ou de vis à vis (2) avec un support d'enregistrement magnétique;
- un élément de détection magnétique du type à effet magnéto-résistif (3) placé dans ledit intervalle magnétique (g) et s'en étendant dans une direction vers l'arrière (x); et
- un bobinage de tête (7) enroulé autour d'un circuit magnétique formé par lesdits premier et second noyaux magnétiques à film mince sur un côté arrière dudit élément de détection magnétique du type à effet magnéto-résistif (3);
tête dans laquelle l'espacement entre lesdites parties d'extrémité avant desdits premier et second noyaux magnétiques à film mince, dans une zone où est placé l'élément de détection magnétique du type à effet magnéto-résistif (3), augmente progressivement avec la distance dudit intervalle magnétique (g) dans ladite direction vers l'arrière (x);
dans laquelle un angle Θ₁ défini entre ledit premier noyau magnétique à film mince (11) et ledit élément de détection magnétique du type à effet magnéto-résistif (3) et un autre angle Θ₂ défini entre ledit second noyau magnétique à film mince (12) et ledit élément de détection magnétique du type à effet magnéto-résistif (3) sont liés de façon à satisfaire à la relation : Θ₁ ≠ Θ₂;
tête caractérisée en ce que ledit angle Θ₁ est réglé sur 0° < Θ₁ et ledit angle Θ₂ est réglé sur 0° < Θ₂, ledit élément de détection magnétique du type à effet magnéto-résistif (3) est un stratifié d'un premier film mince du type à effet magnéto-résistif (3A) et d'un second film mince du type à effet magnéto-résistif (3B) raccordé, de façon magnétostatique via un film mince isolant non magnétique (23), audit premier film mince du type à effet magnéto-résistif (3A), et deux électrodes (4a, 4b) formées de couches conductrices à film mince sont raccordées, de façon électrique, aux extrémités opposées desdits premier et second films minces du type à effet magnéto-résistif (3A, 3B).

2. Tête magnétique à film mince du type composite selon la revendication 1, dans laquelle ledit angle Θ₂ est réglé à 0° < Θ₂ ≤ 90°.

3. Tête magnétique à film mince du type composite selon la revendication 2, dans laquelle ledit angle Θ₂ est réglé à 30° ≤ Θ₂ ≤ 90°.
